(19) Europäisches Patentamt / European Patent Office / Office européen des brevets

(11) **EP 3 572 798 A1**

(12) **DEMANDE DE BREVET EUROPEEN**

(43) Date de publication:
**27.11.2019 Bulletin 2019/48**

(51) Int Cl.:
**G01N 21/64** *(2006.01)* **G03H 1/00** *(2006.01)*
**G01N 15/14** *(2006.01)* *G01N 21/45* *(2006.01)*

(21) Numéro de dépôt: **19175654.3**

(22) Date de dépôt: **21.05.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **23.05.2018 FR 1854301**

(71) Demandeurs:
• **Commissariat à l'Énergie Atomique et aux Énergies Alternatives**
**75015 Paris cedex (FR)**
• **Horiba ABX SAS**
**34184 Montpellier Cedex 4 (FR)**

(72) Inventeurs:
• **LE CARDINAL DE KERNIER, Isaure**
**38054 Grenoble cedex 09 (FR)**
• **BLANDIN, Pierre**
**38054 Grenoble cedex 09 (FR)**
• **BORDY, Thomas**
**38054 Grenoble cedex 09 (FR)**
• **CIONI, Olivier**
**38054 Grenoble cedex 09 (FR)**
• **MONNERET, Serge**
**13013 Marseille (FR)**
• **RONGEAT, Nelly**
**34790 Grabels (FR)**

(74) Mandataire: **GIE Innovation Competence Group**
**310, avenue Berthelot**
**69372 Lyon Cedex 08 (FR)**

(54) **DISPOSITIF ET PROCÉDÉ D'OBSERVATION D'UN ÉCHANTILLON FLUORESCENT PAR IMAGERIE DÉFOCALISÉE**

(57) L'invention est un procédé et un dispositif permettant d'observer un échantillon fluorescent selon deux modalités :
- l'imagerie de fluorescence, dans laquelle l'échantillon est optiquement conjugué à un capteur d'image
- l'imagerie défocalisée, dans laquelle l'image est acquise selon une configuration défocalisée par rapport à une position de mise au point.

L'image obtenue par imagerie défocalisée peut faire l'objet d'une reconstruction à l'aide d'un algorithme de reconstruction holographique, de manière à obtenir une information quant à la structure de l'échantillon observé.

Fig. 1A

**Description**

## DOMAINE TECHNIQUE

Le domaine technique de l'invention est un dispositif d'observation d'un échantillon fluorescent par imagerie défocalisée. L'échantillon peut notamment être un échantillon biologique.

## ART ANTERIEUR

L'application de la microscopie à des échantillons fluorescents est une technique très courante d'observation, en particulier dans le domaine de la biologie ou du diagnostic médical. Selon cette technique, l'échantillon est disposé dans un plan objet d'un objectif, optiquement couplé à un capteur d'image. On illumine l'échantillon selon une longueur d'onde d'excitation, induisant une fluorescence de l'échantillon, de façon à former une image de fluorescence. On illumine également l'échantillon selon une longueur d'onde n'induisant pas de fluorescence, de façon à former une image en transmission, représentant la structure de l'échantillon. L'image de fluorescence et l'image en transmission sont fréquemment superposées. Par image en transmission, on entend une image de l'échantillon lorsque ce dernier est interposé entre une source de lumière et le capteur d'image.

Un problème se pose lorsque l'échantillon est transparent ou translucide. Ce cas de figure est assez fréquent lors de l'observation d'échantillons dans le domaine de la biologie, par exemple lorsque l'échantillon comporte des cellules ou des microorganismes. L'image visible, formée alors que l'échantillon est dans le plan objet de l'objectif, est peu contrastée. Elle n'est alors pas exploitable, ou pas suffisamment exploitable pour obtenir une information précise quant à la structure de l'échantillon.

Des dispositifs bimodaux, permettant d'obtenir une image de fluorescence et une image de phase ont été décrits, l'image de phase permettant d'accéder à une information morphologique relative à un échantillon. Les publications Chowdhury S. "Spatial frequency-domain multiplexed microscopy for simultaneous, single camera, one-shot, fluorescent, and quantitative -phase imaging", Optics Letters, Vol. 40, No 21, November 2015, ou Park Y. "Diffraction phase and fluorescence microscopy", Optics Express Vol.14, No. 18, September 2006, décrivent des dispositifs à imagerie de phase, disposant également d'une modalité de fluorescence. Il s'agit cependant de dispositifs complexes, encombrants et couteux. De plus, leur champ d'observation est faible, ce qui n'est pas adapté à des échantillons de surface importante, sauf à devoir effectuer un balayage de l'échantillon. En outre, le champ d'observation de tels dispositifs ne leur permet pas d'adresser des échantillons comportant un grand nombre d'objets à caractériser, de manière à obtenir une information statistique. De plus l'utilisation de tels dispositifs semble de devoir se limiter à une utilisation en laboratoire.

On sait que l'imagerie sans lentille permet de former une image d'un échantillon selon des champs d'observation élevés. Couplée à des algorithmes de reconstruction holographique, cette technique a été largement décrite, par exemple dans la publication Coskun A. "Lensfree Fluorescent On-chip imaging of transgenic Caenorhabditis elegans over an ultra-wide field of view", PLoS ONE (511):e15955, January 2011, ou encore dans la publication Imai K "A lens-free single shot fluorescent imaging system using CMOS image sensors with dielectric multi-layer filter", Solid states sensors, actuators and microsystems, Transducers, 2017. Le recours à l'imagerie sans lentille permet d'obtenir une image exploitable de la structure de l'échantillon. Cependant, du fait de l'absence de focalisation, en ce qui concerne l'imagerie de fluorescence, la sensibilité et la résolution des méthodes par imagerie sans lentille est très limitée. En effet, la lumière de fluorescence est émise de façon isotrope. L'éloignement de l'échantillon par rapport au capteur d'image est préjudiciable à la sensibilité et à la résolution.

La demande de brevet WO2016/107995 décrit un dispositif et un procédé pour définir précisément une position d'une particule par rapport à un faisceau laser, préalablement à une analyse de la particule par spectroscopie Raman ou par fluorescence. La connaissance de la position de la particule permet de focaliser précisément le faisceau laser sur cette dernière. L'objectif du dispositif décrit dans la demande est de n'illuminer que la particule adressée, en évitant l'illumination de son voisinage.

Le document EP2023127 décrit un procédé permettant une mise au point d'un système de mesure de fluorescence en formant une pile d'images d'un échantillon, chaque image étant acquise selon une configuration défocalisée. Le document US2011/0254943 décrit une méthode selon laquelle plusieurs images défocalisées d'un échantillon sont acquises, selon différentes distances de défocalisation. Un traitement des images défocalisées permet de former une image qui comporte une information comparable à celle résultant d'une image de fluorescence de l'échantillon. Ainsi, US2011/0254943 présente l'imagerie défocalisée comme étant une alternative à l'imagerie de fluorescence.

Les inventeurs ont développé un dispositif et un procédé d'observation bimodale d'un échantillon, permettant d'adresser un champ d'observation large tout en présentant une sensibilité élevée à l'égard de la fluorescence. Par ailleurs, le dispositif peut permettre d'obtenir une résolution spatiale améliorée. Le procédé met en oeuvre un dispositif de conception simple et peu onéreux.

## EXPOSE DE L'INVENTION

Un premier objet de l'invention est un procédé d'observation d'un échantillon fluorescent, s'étendant selon un plan, dit plan de l'échantillon, l'échantillon comportant un agent fluorescent, ou fluorophore, apte à émettre une onde lumineuse de fluorescence, dans une bande spectrale de fluorescence, lorsqu'il est illuminé par une onde lumineuse d'excitation, dans une bande spectrale d'excitation, l'échantillon étant disposé face à un capteur d'image, le capteur d'image s'étendant selon un plan de détection, le capteur d'image étant couplé à un système optique, le procédé comportant les étapes suivantes :

a) première illumination de l'échantillon à l'aide d'une première source de lumière, selon une première bande spectrale, et acquisition d'au moins une première image de l'échantillon, dans la première bande spectrale, par le capteur d'image, le capteur d'image étant défocalisé, par rapport à l'échantillon, selon une distance de défocalisation;
b) deuxième illumination de l'échantillon à l'aide d'une deuxième source de lumière, selon une deuxième bande spectrale, la deuxième bande spectrale s'étendant dans la bande spectrale d'excitation, la deuxième illumination illuminant de préférence une surface de l'échantillon supérieure à 10 mm$^2$, et acquisition d'au moins une deuxième image de l'échantillon, dans la bande spectrale de fluorescence, par le capteur d'image, le capteur d'image étant disposé de telle sorte que le plan de détection soit conjugué du plan de l'échantillon;

le procédé comportant, entre l'étape a) et l'étape b), un déplacement de l'échantillon relativement au système optique, ou un déplacement du capteur d'image relativement au système optique, selon la distance de défocalisation, ou une modification de la distance focale du système optique selon la distance de défocalisation, de telle sorte que :

- la première image, ou chaque première image, est une image défocalisée de l'échantillon, représentative d'une structure de l'échantillon ;
- la deuxième image, ou chaque deuxième image, est une image focalisée de l'échantillon, représentative d'une fluorescence de l'échantillon.

Le système optique définit un axe optique. Le déplacement de l'échantillon est effectué parallèlement à l'axe optique.

Par défocalisé selon une distance de défocalisation, il est entendu que l'échantillon et/ou le capteur d'image sont déplacés, de la distance de défocalisation, par rapport à une configuration de mise au point, selon laquelle le système optique assure une conjugaison entre le capteur d'image et l'échantillon. La distance de défocalisation représente un décalage par rapport à la configuration de mise au point. Elle est de préférence inférieure à 5 mm, voire inférieure à 1 mm. Elle est généralement comprise entre 10 $\mu$m et 200 $\mu$m.

Par image représentative d'une structure de l'échantillon, on entend une image représentative de la structure externe ou interne de l'échantillon. Il peut s'agir d'une image de la morphologie de l'échantillon, par exemple de sa forme ou de son aspect visuel, ou d'une distribution spatiale de son indice de réfraction. Une image représentative d'une structure de l'échantillon inclut également une image représentative de la structure externe ou interne de particules composant l'échantillon.

Par première image, il est entendu une image acquise selon une première modalité d'imagerie défocalisée. Par deuxième image, ou image de fluorescence, il est entendu une image acquise selon une deuxième modalité d'imagerie de fluorescence.

La première source de lumière peut être confondue avec la deuxième source de lumière. De préférence, lors de l'étape b), l'échantillon est illuminé par un faisceau d'illumination parallèle. Un faisceau d'illumination parallèle est un faisceau de rayons lumineux se propageant parallèlement les uns aux autres.

Le procédé peut comporter une étape c) d'application d'un opérateur de reconstruction à partir de la première image, de façon à obtenir une image reconstruite de l'échantillon dans un plan de reconstruction. Selon un mode de réalisation, l'étape a) comporte plusieurs acquisitions de premières images, respectivement selon différentes distances de défocalisation. Lequel l'étape c) comporte alors une prise en compte des premières images acquises lors de l'étape a). Lors de l'étape a), la distance de défocalisation est de préférence inférieure à 5 mm.

Selon un mode de réalisation, la deuxième source de lumière est disposée dans un demi-espace délimité par le plan de l'échantillon et comprenant le capteur d'image. Selon un autre mode de réalisation, la deuxième source de lumière est disposée dans un demi-espace délimité par le plan de l'échantillon et comprenant la première source de lumière.

Les étapes a) et b) peuvent être réalisées successivement, l'étape a) étant réalisée avant l'étape b) ou réciproquement.

Selon un mode de réalisation, lors de l'étape b), le système optique présentant une distance focale, il est disposé selon une configuration dite 2f-2f, selon laquelle :

- la distance entre le capteur d'image et le système optique est égale à deux fois la distance focale;
- la distance entre le système optique et l'échantillon est égale à deux fois la distance focale ;

de telle sorte que la deuxième image, ou chaque deuxième image est acquise selon un grandissement de l'objet égal à 1.

Lors de l'étape a), il peut être avantageux que la première illumination produise un premier faisceau convergent se propageant jusqu'à l'échantillon, en convergeant jusqu'à ce dernier.

Selon un mode de réalisation, l'étape a) comporte les sous-étapes suivantes :

ai) acquisition de plusieurs premières images de l'échantillon, l'échantillon étant immobile par rapport à la première source de lumière, le capteur d'image étant déplacé, dans le plan de détection, entre deux acquisitions successives ;

aii) association, à chaque première image acquise, d'une position du capteur d'image dans le plan de détection, chaque position étant différente l'une de l'autre, à chaque position du capteur d'image correspondant un champ d'observation de la première image ;

aiii) calcul d'un déplacement de chaque première image acquise par rapport à une image de référence dans laquelle le capteur d'image occupe une position de référence ;

aiv) formation d'une première image résultante, à partir des premières images acquises lors de la sous-étape ai), et du déplacement calculé pour chacune d'entre elles, la première image résultante comportant davantage de pixels que chaque première image, le champ d'observation de la première image résultante étant formé par une intersection des champs d'observation de chaque première image acquise lors de la sous-étape ai).

Lorsque l'étape a) comporte plusieurs acquisitions de premières images, respectivement selon différentes distances de défocalisation, les sous-étapes ai) à aiv) sont effectuées pour chaque distance de défocalisation, de façon à obtenir une première image résultante pour chaque distance de défocalisation.

Le procédé peut comporter une étape c) d'application d'un opérateur de reconstruction à partir de la première image résultante, ou d'au moins une première image résultante, de façon à obtenir une image reconstruite de l'échantillon dans un plan de reconstruction.

Selon un mode de réalisation, l'étape b) comporte les sous-étapes suivantes :

bi) acquisition de plusieurs deuxièmes images de l'échantillon, l'échantillon étant immobile par rapport à la deuxième source de lumière, le capteur d'image étant déplacé, dans le plan de détection, entre deux acquisitions successives ;

bii) association, à chaque deuxième image acquise, d'une position du capteur d'image dans le plan de détection, chaque position étant différente l'une de l'autre, à chaque position du capteur d'image correspondant un champ d'observation de la deuxième image ;

biii) calcul d'un déplacement de chaque deuxième image acquise par rapport à une image de référence dans laquelle le capteur d'image occupe une position de référence ;

biv) formation d'une deuxième image résultante, à partir des deuxièmes images acquises et du déplacement calculé pour chacune d'entre elles, la deuxième image résultante comportant davantage de pixels que chaque deuxième image, le champ d'observation de la deuxième image résultante étant formé par une intersection des champs d'observation de chaque deuxième image acquise lors de la sous-étape bi).

Le capteur d'image peut être solidaire d'un transducteur piézoélectrique, le déplacement du capteur d'image étant généré par une activation du transducteur piézoélectrique.

Le déplacement du capteur d'image entre deux positions successives est de préférence aléatoire.

La première image peut comporter une information relative à la structure interne ou externe de l'échantillon, ou de particules composant l'échantillon. Il peut s'agir :

- d'une forme de l'échantillon ou de particules disposées dans l'échantillon;
- ou d'un aspect visuel de l'échantillon ou de particules disposées dans l'échantillon ;
- ou d'une structure interne de l'échantillon ou de particules disposées dans l'échantillon.

Selon un mode de réalisation, le système optique comporte une lentille dont la distance focale est variable, le procédé comportant une modification de la distance focale entre l'étape a) et l'étape b).

Un autre objet de l'invention est un dispositif d'observation d'un échantillon fluorescent, l'échantillon comportant un agent fluorescent apte à émettre une onde lumineuse dans une bande spectrale de fluorescence lorsqu'il est illuminé selon une bande spectrale d'excitation, le dispositif comportant :

- une première source de lumière configurée pour émettre une onde lumineuse selon une première bande spectrale;
- une deuxième source de lumière, configurée pour émettre une onde lumineuse dans une deuxième bande spectrale, s'étendant dans une bande spectrale d'excitation de l'agent fluorescent ;

- un capteur d'image, optiquement couplé à un système optique, le capteur d'image s'étendant dans un plan de détection ;
- un support, destiné à recevoir l'échantillon, de telle sorte que l'échantillon, lorsqu'il est disposé sur le support, s'étend selon un plan, dit plan d'échantillon, ce dernier s'étendant entre le système optique et la première source de lumière;
- un moyen de déplacement, pour déplacer l'échantillon relativement au système optique ou pour déplacer le capteur d'image relativement au système optique, ou un moyen pour modifier une distance focale du système optique ;

de telle sorte que le capteur d'image est configuré pour acquérir :

- une première image défocalisée de l'échantillon, dans la première bande spectrale, lorsque l'échantillon est illuminé par la première source de lumière;
- une deuxième image nette de l'échantillon, dans la bande spectrale de fluorescence, lorsque ce dernier est illuminé par la deuxième source de lumière;

Le dispositif peut comporter un transducteur piézoélectrique, relié au capteur d'image, apte à induire un déplacement du capteur d'image dans le plan de détection.

Le système optique peut-être une lentille dont la distance focale est ajustable électriquement.

Le dispositif peut comporter un microprocesseur, configuré pour exécuter des instructions permettant la mise en oeuvre de:

- l'étape c) précédemment évoquée en lien avec le premier objet de l'invention ;
- et/ou les sous-étapes aii) à aiv) précédemment évoquées en lien avec le premier objet de l'invention ;
- et/ou les sous-étapes bii) à biv) précédemment évoquées en lien avec le premier objet de l'invention.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

## FIGURES

La figure 1A est un exemple de dispositif permettant une mise en oeuvre de l'invention.

La figure 1B montre les principales étapes d'un procédé selon l'invention.

Les figures 2A à 2F sont des images illustrant une première modalité d'observation d'un échantillon. Les figures 2G à 2H sont des images illustrant une deuxième modalité d'observation de l'échantillon représenté sur les figures 2A à 2F.

La figure 3A montre les principales étapes d'un mode de réalisation de l'invention. Les figures 3B à 3E illustrent un déplacement d'un capteur d'image selon le mode de réalisation décrit en lien avec la figure 3A.

Les figures 4A à 4D sont des images illustrant une application du mode de réalisation de l'invention décrit en lien avec la figure 3A, à l'aide d'images acquises selon la première modalité.

Les figures 5A à 5E sont des images illustrant une application du mode de réalisation de l'invention décrit en lien avec la figure 3A, à l'aide d'images acquises selon la deuxième modalité.

Les figures 6A à 6C sont des images illustrant une application du mode de réalisation de l'invention décrit en lien avec la figure 3A, à l'aide d'images acquises selon la deuxième modalité.

## EXPOSE DE MODES DE REALISATION PARTICULIERS

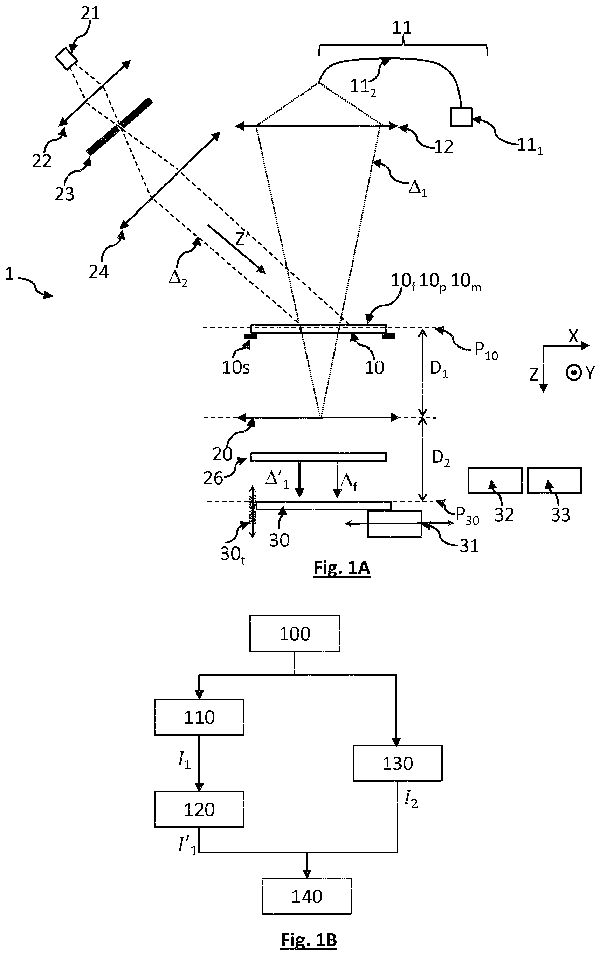

On a représenté, sur la figure 1A, un exemple de dispositif selon l'invention. Le dispositif comporte un échantillon 10, que l'on souhaite analyser, disposé sur un support d'échantillon 10s. L'échantillon peut être un échantillon solide ou liquide, transparent ou translucide. Il peut par exemple s'agir d'une fine lame de tissu biologique, par exemple d'une lame d'anatomopathologie, ou encore d'un extrait sec d'un liquide, par exemple d'un liquide biologique. L'échantillon peut également comprendre un milieu liquide $10_m$ dans lequel baignent des particules $10_p$. L'échantillon peut comporter un réactif, par exemple un agent de marquage. Le milieu $10_m$ peut être un milieu de culture ou un milieu tampon. Il peut également comporter un liquide corporel, à l'état pur ou dilué. Par liquide corporel, on entend un liquide généré par un corps vivant. Il peut en particulier s'agir, à titre non limitatif, de sang, d'urine, de liquide céphalorachidien, de sperme, de lymphe. Par particule, on entend notamment une cellule, par exemple de type cellule sanguine ou une cellule de culture, ou un microorganisme, par exemple une bactérie. Une particule peut être une microbille, par exemple une microbille magnétique, ou une autre particule solide, non soluble dans le milieu $10_m$. Une particule peut être un exosome ou une goutelette d'une émulsion. Il peut également s'agir d'un amas cellulaire, ou d'un débris cellulaire, ou d'un noyau cellulaire, ou d'un organite cellulaire. L'échantillon peut avoir subi une étape préalable de préparation, par exemple un marquage et/ou une dilution.

L'échantillon comporte un agent fluorescent $10_f$. Par agent fluorescent, on entend un fluorophore ou un fluorochrome. Il peut s'agir d'un agent exogène, ajouté à l'échantillon préalablement à son observation, ou d'un agent endogène, naturellement présent dans l'échantillon. Lorsqu'il est illuminé dans une bande spectrale d'excitation $\Delta\lambda_e$, l'agent fluorescent $10_f$ émet une onde lumineuse de fluorescence $\Delta_f$ dans une bande spectrale de fluorescence $\Delta\lambda_f$. Un agent fluorescent exogène est généralement ajouté à l'objet, de manière à se fixer spécifiquement sur des cibles, par exemple une certaine catégorie de cellules, ou plus généralement sur des structures biologiques d'intérêt, par exemple un noyau d'une cellule, un brin d'acide nucléique (ADN ou ARN), une cellule cancéreuse, ou une structure biologique comportant un ligand apte à se greffer préférentiellement avec l'agent fluorescent, ou avec un intermédiaire, par exemple un anticorps, greffé avec l'agent fluorescent. L'agent fluorescent utilisé peut être du DAPI (4',6-diamidino-2-phénylindole). Dans ce cas, la bande spectrale d'excitation $\Delta\lambda_e$ est comprise entre 350 nm et 400 nm, la bande spectrale de fluorescence (ou bande spectrale de fluorescence) $\Delta\lambda_f$ étant comprise entre 430 nm et 530 nm. Le DAPI est connu pour se fixer sur certaines bases d'ADN. Son utilisation permet par exemple de localiser l'ADN dans une cellule. On peut également utiliser un marqueur Hoechst, dont les propriétés optiques sont proches du DAPI, mais étant moins toxique. On peut également utiliser le Thiazole Orange. L'agent fluorescent peut également être de l'isothiocyanate de fluorescéine, connu de l'homme du métier sous l'acronyme FITC, ou la protéine de fluorescence verte, connue de l'homme du métier sous l'acronyme GFP (Green Fluorescent Protein), ou tout autre agent fluorescent connu de l'homme du métier.

Le support d'échantillon 10s est configuré pour recevoir un échantillon 10, de telle sorte que l'échantillon soit maintenu sur le support 10s en s'étendant selon un plan, dit plan d'échantillon $P_{10}$. Le support d'échantillon 10s peut être une lame de verre transparente ou une chambre fluidique, de préférence transparente, dont l'épaisseur peut par exemple varier entre 10 $\mu m$ et 1 cm, et de préférence entre 20 $\mu m$ et 500 $\mu m$.

Le dispositif représenté sur la figure 1A comporte une première source de lumière 11 et une deuxième source de lumière 21. La première source de lumière 11 est configurée pour émettre une première onde lumineuse $\Delta_1$ dans une première bande spectrale $\Delta\lambda_1$. La première onde lumineuse $\Delta_1$ se propage selon un premier axe de propagation Z avant d'atteindre l'échantillon. La deuxième source de lumière 21 est configurée pour émettre une deuxième onde lumineuse $\Delta_2$ dans une deuxième bande spectrale $\Delta\lambda_2$, selon un deuxième axe de propagation Z'.

Un des objectifs du dispositif 1 est l'observation de l'échantillon 10 selon une première modalité d'imagerie défocalisée, ainsi que selon une deuxième modalité de fluorescence. Aussi, la deuxième bande spectrale $\Delta\lambda_2$ correspond à la bande spectrale d'excitation $\Delta\lambda_e$ de l'agent fluorescent $10_f$ présent dans l'échantillon 10. La première bande spectrale $\Delta\lambda_1$ de la première onde lumineuse $\Delta_1$ s'étend de préférence en dehors de la bande spectrale d'excitation de l'agent fluorescent, mais cela n'est pas impératif.

Dans cet exemple, la première source de lumière 11 est formée d'une source émettrice $11_1$ couplée à une fibre optique $11_2$, dont une extrémité est disposée face à la source émettrice $11_1$. La source émettrice peut être une diode électroluminescente. De préférence, la première bande spectrale $\Delta\lambda_1$ a une largeur inférieure à 100 nm, voire à 50 nm et de préférence inférieure à 10 nm. Par largeur, il est entendu une largeur à mi-hauteur de bande spectrale. La bande spectrale de la première onde lumineuse $\Delta_1$ peut être ajustée au moyen d'un filtre passe-bande interposé entre la première source de lumière 11 et l'échantillon 10. La première onde lumineuse $\Delta_1$ se propage selon l'axe de propagation Z. Elle atteint de préférence l'échantillon 10 selon une incidence normale. Ainsi, le plan de l'échantillon $P_{10}$ s'étend perpendiculairement ou sensiblement perpendiculairement à l'axe de propagation Z de la première onde lumineuse $\Delta_1$. Le terme sensiblement perpendiculairement signifie que les deux éléments peuvent ne pas être rigoureusement perpendiculaires, une tolérance angulaire de quelques degrés, inférieure à 20° ou 10° étant admise.

L'échantillon 10 est disposé entre la première source de lumière 11 et un capteur d'image 30. Dans cet exemple, l'échantillon 10 s'étend selon un plan $P_{10}$, perpendiculaire à l'axe de propagation Z.

De préférence, une lentille convergente 12 est disposée entre la première source de lumière 11 et l'échantillon, de façon à ce que la première onde lumineuse $\Delta_1$ soit convergente lorsqu'elle atteint l'échantillon. Cela permet de limiter le phénomène d'aberrations optiques De préférence, la première onde lumineuse converge en une face avant d'un système optique 20 décrit ci-après. De ce fait, la première onde lumineuse ne traverse qu'une partie centrale du système optique, proche de l'axe optique du système optique, ce qui limite les aberrations géométriques.

Le dispositif comporte un système optique 20, disposé entre l'échantillon 10 et un capteur d'image 30. Afin de maximiser le champ d'observation, le système optique 20 présente de préférence un grandissement optique égal à 1 ou proche de 1. Le système optique peut présenter un grandissement compris entre 0.5 et 5. Le système optique définit un plan objet et un plan image.

Le capteur d'image 30 est configuré pour former une image de l'échantillon, dans chaque modalité d'imagerie, selon un plan de détection $P_{30}$. Dans l'exemple représenté, le capteur d'image 30 comporte une matrice de pixels, de type CCD ou un CMOS. Le plan de détection $P_{30}$ s'étend de préférence perpendiculairement à l'axe de propagation Z de la première onde lumineuse $\Delta_1$.

La deuxième source de lumière 21 émet une deuxième onde lumineuse $\Delta_2$ dans la bande d'excitation $\Delta\lambda_e$ de l'agent fluorescent $10_f$ présent dans l'échantillon. Le rendement de fluorescence étant généralement faible, la deuxième source de lumière est de préférence une source laser, de manière à émettre une onde lumineuse intense, dans une bande spectrale étroite, correspondant à un spectre d'absorption de l'agent fluorescent.

La deuxième source de lumière 21 peut être disposée :

- dans un demi-espace délimité par le plan de l'échantillon $P_{10}$ et comprenant la première source de lumière 11 ;
- ou dans un demi-espace délimité par le plan de l'échantillon $P_{10}$ et comprenant le capteur d'image 30.

Dans l'exemple représenté sur la figure 1A, la deuxième source de lumière 21 est une diode laser, couplée à une lentille 22, cette dernière focalisant la deuxième onde lumineuse $\Delta_2$ au centre d'un diaphragme 23. La deuxième onde lumineuse atteint, en aval du diaphragme 23, une lentille convergente 24. En aval de la lentille convergente 24, la deuxième onde lumineuse se propage en formant un faisceau parallèle se propageant jusqu'à l'échantillon 10. Ainsi, la deuxième onde lumineuse atteint l'échantillon en formant un front d'onde homogène, ou pouvant être considéré comme tel. La deuxième onde lumineuse peut atteindre l'échantillon selon un angle d'incidence quelconque. La lentille 22, le diaphragme et la lentille convergente 24 permettent la formation d'un faisceau parallèle, d'une aire suffisamment élevée pour qu'une surface de l'échantillon, de préférence supérieure à 15 mm$^2$ ou 20 mm$^2$, soit illuminée de façon homogène.

Ainsi, la deuxième onde lumineuse $\Delta_2$ atteint l'échantillon en formant un faisceau, de préférence parallèle à l'axe de propagation Z', et dont l'aire, perpendiculairement à l'axe de propagation Z', est supérieure à 10 mm$^2$, voire à 20 mm$^2$. Elle peut par exemple correspondre à la taille du capteur d'image, ou être supérieure à la taille du capteur d'image lorsque le grandissement est égal à 1. D'une manière générale, la deuxième onde lumineuse $\Delta_2$ illumine une surface de l'échantillon supérieure ou égale à la surface de l'échantillon conjuguée au capteur d'image 30 par le système optique 20.

Le dispositif représenté sur la figure 1A comporte un actionneur $30_t$ pour rapprocher ou éloigner le capteur d'image 30 du système optique 20, selon l'axe de propagation Z de la première onde lumineuse $\Delta_1$. Il peut par exemple s'agir d'une platine motorisée permettant une translation du capteur d'image 30 parallèlement à l'axe de propagation Z. En variante, le dispositif peut comporter un actionneur pour rapprocher ou éloigner l'échantillon 10 du système optique 20. Le dispositif comporte un filtre passe-bande ou passe-haut 26, disposé entre l'échantillon 10 et le capteur d'image 30, de façon à bloquer la bande spectrale d'excitation $\Delta\lambda_e$ et à transmettre la bande spectrale de fluorescence $\Delta\lambda_f$ ainsi que des longueurs d'onde de la première bande spectrale $\Delta\lambda_1$. Il peut par exemple s'agir d'un filtre passe-haut dont la fréquence de coupure est supérieure à la longueur d'onde d'excitation. Il peut également s'agir d'un filtre notch (réjecteur de bande), bloquant la bande spectrale d'excitation et transmettant la bande spectrale de fluorescence. Le filtre 26 peut être amovible.

Le dispositif comporte un processeur 32, par exemple un microprocesseur, apte à traiter les images acquises par le capteur d'image 30. En particulier, le processeur est un microprocesseur 32 relié à une mémoire programmable 33 dans laquelle est stockée une séquence d'instructions pour effectuer les opérations de traitement d'images et de calculs décrites dans cette description.

Quelle que soit la modalité d'imagerie, les images de l'échantillon sont de préférence acquises à l'aide d'un même capteur d'image 30.

Selon un mode de réalisation, les première et deuxième sources de lumière forment une même source de lumière. Dans ce cas, lors de la deuxième modalité, un filtre passe-bande, de préférence amovible, est interposé entre la source de lumière et l'échantillon, de façon à restreindre la bande spectrale de la source à la bande spectrale d'excitation de l'agent fluorescent. Alternativement, on peut utiliser un filtre passe bas, sélectionnant une bande spectrale correspondant, totalement ou en partie, à la bande spectrale d'excitation de l'agent fluorescent.

On va à présent décrire plus précisément la première modalité et la deuxième modalité d'observation de l'échantillon, dont les principales étapes sont décrites en lien avec la figure 1B.

Etape 100 : disposition de l'échantillon sur le support d'échantillon.

Etape 110 : Acquisition d'une image selon la première modalité.

Dans la première modalité, l'échantillon est illuminé par la première source de lumière 11. Selon cette modalité, le capteur d'image 30 est placé selon une configuration défocalisée. Par exemple, le plan objet du système optique 20 est décalé par rapport à l'échantillon. De façon alternative, le plan image du système optique 20 est décalé par rapport au capteur d'image 30. D'une façon générale, dans la première modalité, le capteur d'image et/ou l'échantillon sont décalés, selon une distance de défocalisation, par rapport à une configuration de mise au point, selon laquelle le plan image correspond au plan de détection et le plan objet s'étend dans l'échantillon. La distance de défocalisation est de préférence inférieure à 1 cm, et de préférence inférieure à 1.5 mm ou 500 $\mu$m. Elle peut être par exemple de 100 $\mu$m. A partir de la configuration de mise au point, la défocalisation est obtenue en modifiant la distance $D_1$ entre le système optique 20 et l'échantillon et/ou en modifiant la distance $D_2$ entre le système optique 20 et le capteur d'image 30. Dans l'exemple représenté sur la figure 1A, la défocalisation est obtenue en déplaçant le capteur d'image 30 relativement au système optique 20. Selon d'autres modes de réalisation, la défocalisation peut être obtenue en déplaçant l'échantillon 10 relativement au système optique 20. La défocalisation peut également être obtenue en retirant le filtre passe-haut 26.

Selon un mode de réalisation, la distance focale du système optique 20 est ajustable. La défocalisation est obtenue en modifiant la distance focale du système optique. Le système optique peut par exemple comporter une lentille dont la courbure est ajustable, par exemple par application d'un champ électrique. Il peut s'agir d'une lentille connue par l'homme du métier par le terme "Electrically Tunable Lens", ce qui signifie une lentille ajustable électriquement.

Selon une configuration préférée, le système optique 20 est placé selon une configuration usuellement désignée par le terme "2f- 2f". Le système optique 20 est alors distant de deux fois la distance focale de l'échantillon 10 ainsi que du capteur d'image 30, à la distance de défocalisation près. Selon cette configuration, le grandissement est égal à 1. L'aire de l'échantillon observé correspond à la surface sensible du capteur d'image.

Selon la première modalité, le capteur d'image 30 acquiert une première image $I_1$ défocalisée de l'échantillon 10, dans la première bande spectrale $\Delta\lambda_1$. Selon cette configuration, le capteur d'image 30 est exposé à une onde lumineuse $\Delta'_1$, dite onde lumineuse d'exposition. L'onde lumineuse d'exposition $\Delta'_1$ est formée par :

- une partie de la première onde lumineuse $\Delta_1$ émise par la première source de lumière 11, et ayant traversée l'échantillon sans interagir avec ce dernier ;
- des ondes de diffraction, formées par la diffraction d'une partie de la première onde lumineuse $\Delta_1$ dans l'échantillon.

La première image $I_1$ acquise par le capteur d'image 30 comporte des figures d'interférences (ou figures de diffraction), représentatives de l'échantillon 10, ou des particules composant ce dernier. De façon générale, la première image acquise $I_1$ par le capteur d'image 30 est représentative de la morphologie ou de la structure de l'échantillon. Comme précédemment indiqué, la structure de l'échantillon comporte la structure interne ou externe de l'échantillon ou des particules qui le composent.

Etape 120 : Application d'un algorithme de reconstruction holographique à partir de la première image.

La première image $I_1$, ou chaque première image, acquise par le capteur d'image 30, selon la première modalité, défocalisée, ne permet pas d'obtenir une représentation précise de l'échantillon observé. De façon usuelle dans le domaine de l'holographie, on peut appliquer, à la première image $I_1$, un opérateur de reconstruction holographique $h$, de façon à calculer une amplitude complexe $A$ représentative de l'onde lumineuse $\Delta'_1$, à laquelle est exposé le capteur d'image, et cela en tout point de coordonnées $(x,y,z)$ de l'espace, et en particulier dans un plan, dit de reconstruction $P_z$, situé à une distance $|z|$, dite distance de reconstruction, du capteur d'image 30. Le plan de reconstruction est de préférence un plan $P_{10}$ selon lequel s'étend l'échantillon 10. L'amplitude complexe $A(x,y,z)$ au point de coordonnées $(x,y,z)$ s'obtient à partir de la première image $I_1$, par un produit de convolution selon l'équation:
$A(x,y,z) = I_1(x,y,z) * h$, le symbole $*$ désignant l'opérateur produit de convolution.

Les coordonnées $(x,y)$ désignent une position planaire dans un plan radial perpendiculaire à l'axe de propagation Z. La coordonnée $z$ désigne une coordonnée selon l'axe de propagation Z. Avant l'application de l'opérateur de reconstruction, la première image $I_1$ peut être normalisée ou subir un pré-traitement avant la convolution par l'opérateur de reconstruction.

L'amplitude complexe $A$ de l'onde lumineuse d'exposition $\Delta'_1$, en tout point de coordonnées $(x,y,z)$ de l'espace, est telle que : $A(x,y,z) = M(x,y,z)e^{j\varphi(x,y,z)}$ où $M(x,y,z)$ et $\varphi(x,y,z)$ désignent respectivement le module et la phase de l'onde lumineuse d'exposition $\Delta'_1$, au point de coordonnées $(x,y,z)$. On a alors :

- $M(x,y,z) = abs\,[A(x,y,z)]$;
- $\varphi(x,y,z) = arg\,[A(x,y,z)]$;

Les opérateurs *abs* et *arg* désignent respectivement le module et l'argument.

L'opérateur de reconstruction est par exemple la fonction de Fresnel-Helmholtz, telle que :

$$h(x,y,z) = \frac{1}{j\lambda z}e^{j2\pi\frac{z}{\lambda}}\exp(j\pi\frac{x^2+y^2}{\lambda z}).$$

Il a pour fonction de décrire la propagation de la lumière entre le capteur d'image 30 et un point de coordonnées $(x,y,z)$, situé à une distance $|z|$ du capteur d'image. L'application d'un opérateur de reconstruction peut s'accompagner d'un bruit de reconstruction important. Des algorithmes de reconstructions holographiques ont été développés de façon à obtenir une reconstruction de qualité. Des exemples sont décrits dans la publication Seo S et al, "High-Throughput lens-free blood analysis on a chip", Anal Chem. 2010 June 1 ; 82(11): 4621-4627, ou encore dans le document WO2017162985.

L'amplitude complexe $A$ est une grandeur complexe dont l'argument et le module sont respectivement représentatifs de la phase et de l'amplitude de l'onde lumineuse d'exposition détectée par le capteur d'image 30. La mise en oeuvre d'un algorithme de reconstruction permet d'obtenir une image complexe $A_z$ représentant une distribution spatiale de l'amplitude complexe $A$ dans un plan de reconstruction $P_z$, s'étendant à une distance $|z|$ du plan de détection $P_{30}$. De tels algorithmes permettent notamment de reconstruire une image $M_z$ du module ou de la phase $\varphi_z$ de l'amplitude complexe décrivant l'onde lumineuse d'exposition $\Delta'_1$, dans le plan de reconstruction. L'image du module ou de la phase de l'onde lumineuse d'exposition $\Delta'_1$ s'obtient respectivement selon les expressions suivantes :

$$M_z = \mathrm{mod}\ (A_z) \text{ et } \varphi_z = \arg(A_z).$$

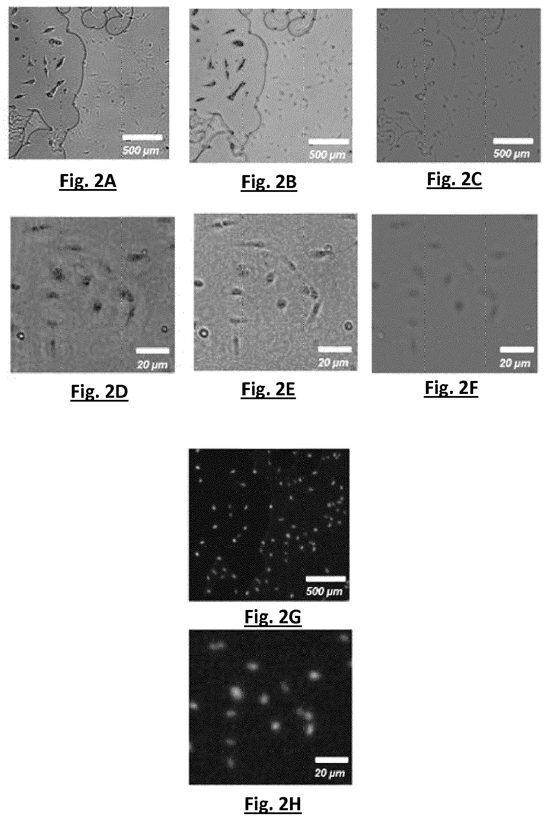

L'image du module ou de la phase de l'onde lumineuse d'exposition $\Delta'_1$ forme une image, dite image reconstruite $I'_1$, comportant une information structurelle relative à l'échantillon. Des exemples sont donnés ci-après, en lien avec les figures 2A à 2C.

Une image de la phase permet l'obtention d'une information relative à l'indice de réfraction optique de l'échantillon. Lorsque l'échantillon comporte des cellules, cela permet d'obtenir une information relative au contenu des cellules. Une image du module permet d'accéder à une information relative à la forme de l'échantillon, ou à la forme des particules qui le composent.

Selon une variante, l'étape 110 comporte une acquisition de plusieurs premières images respectivement selon une pluralité de distances de défocalisation. A chaque première image est associée une distance de défocalisation. On obtient les différentes distances de défocalisation en modifiant la distance entre le capteur d'image 30 et le système optique 20, ou entre le système optique 20 et l'échantillon 10. Au cours de l'étape 120, on met alors un oeuvre un algorithme de reconstruction prenant en compte les premières images acquises. Un tel algorithme est par exemple décrit dans la publication Greenbaum A. "Field-portable wide-field microscopy of dense samples using multi-height pixel super-resolution based lensfree imaging", Lab Chip, 2012, 12, 1242. La défocalisation peut également être obtenue en utilisant une lentille dont la distance focale est ajustable électriquement, comme précédemment décrit.

Etape 130: acquisition d'une deuxième image $I_2$ selon la deuxième modalité.

Selon la deuxième modalité, le capteur d'image 30 acquiert une deuxième image $I_2$ de l'échantillon. Selon cette modalité, le capteur d'image 30 est optiquement conjugué, par le système optique 20, à l'échantillon 10. On se trouve dans une configuration de mise au point. L'échantillon 10 est illuminé dans la deuxième bande spectrale $\Delta\lambda_2$, par la deuxième source de lumière 21. La deuxième bande spectrale $\Delta\lambda_2$ correspondant à tout ou partie de la bande spectrale d'excitation $\Delta_e$, l'agent fluorescent $10_f$ émet une onde lumineuse de fluorescence $\Delta_f$, cette dernière étant focalisée par le système optique 20 sur le capteur d'image 30. Selon la deuxième modalité, le système optique 20 peut se trouver selon la configuration 2f-2f précédemment décrite. L'illumination de l'échantillon 10 selon un faisceau spatialement étendu, et présentant un front d'onde homogène, permet d'adresser une surface importante de l'échantillon, de préférence supérieure ou égale au champ d'observation du capteur d'image 30.

Les dénominations "première image" et "deuxième image" n'ont pas de signification chronologique. La première image peut être acquise avant la deuxième image ou inversement. Ainsi, l'étape 130 peut être réalisée préalablement ou suite à l'étape 110.

Etape 140 : superposition

Cette étape est optionnelle. Elle consiste à superposer la deuxième image $I_2$, généralement après seuillage et/ou colorisation de cette dernière, sur l'image reconstruite obtenue par l'étape 120. Cela permet une identification des zones fluorescentes sur l'image reconstruite $I'_1$.

Des essais ont été réalisés en utilisant un échantillon 10 comportant des cellules COS marquées au DAPI, précédemment évoqué, permettant un marquage des noyaux cellulaires.

Le dispositif utilisé comportait les éléments suivants :

- capteur d'image 30 : capteur CMOS IDS UI-1942LE comportant 3840 par 2748 pixels, la taille de chaque pixel étant de 1.67 $\mu$m x 1.67 $\mu$m, ce qui permet d'obtenir une surface de détection d'environ 30 mm$^2$;
- filtre passe-haut 26 : filtre SEMROCK BLP01-488R-25 ;

- système optique 20 : objectif CANON Macro 100 mm ;
- source émettrice $11_1$ : diode électroluminescente CREEXLAMP quatre couleurs ;
- fibre optique $11_2$ : fibre THORLABS de diamètre de coeur 200 $\mu$m ;
- deuxième source de lumière 12 : diode laser THORLABS L405P20 ;
- objectif 22 : NEWPORTx10 ;
- diaphragme 23 : ouverture de 150 $\mu$m ;
- lentille convergente 24 : lentille THORLABS de focale 50 mm.

Le système optique étant disposé selon une configuration 2f-2f, le champ observé correspond à la surface de détection du capteur, soit 30 mm$^2$.

La figure 2A correspond à une première image $I_1$ acquise par le capteur d'image 30 selon une configuration défocalisée (première modalité), la distance de défocalisation étant de 1200 $\mu$m. Plus précisément, la première image $I_1$ représentée sur la figure 2A est une partie d'une image acquise par le capteur d'image. Les figures 2B et 2C correspondent à des images reconstruites $I'_1$ en appliquant un algorithme de reconstruction holographique à l'image $I_1$. Plus précisément, les figures 2B et 2C représentent respectivement une image du module $M_z$ et de la phase $\varphi_z$ d'une image complexe $A_z$ obtenue à partir de la première image acquise $I_1$. Pour obtenir les images reconstruites $I'_1$, on a reconstruit une image complexe $A_z$ de l'onde lumineuse d'exposition $\Delta'_1$ dans un plan $P_{10}$ selon lequel s'étend l'échantillon. La figure 2G est une image de fluorescence (deuxième image $I_2$) obtenue selon la deuxième modalité.

Les figures 2D, 2E, 2F et 2H sont respectivement des détails des figures 2A, 2B, 2C et 2G.

Le procédé bimodal décrit ci-dessus permet de tirer profit de la présence d'un système optique 20 interposé entre l'échantillon 10 et le capteur d'image 30. Selon la première modalité, la légère défocalisation permet de former une première image, ou plusieurs premières images, ce qui, après application d'un algorithme de reconstruction holographique, permet d'obtenir une image reconstruite montrant la structure de l'échantillon. Selon la deuxième modalité, le système optique permet de disposer d'un rendement élevé de collecte de la lumière de fluorescence, d'où une bonne sensibilité à l'égard de la lumière de fluorescence.

Cependant, la résolution spatiale de la première image, ainsi que de l'image reconstruite, n'est parfois pas pleinement satisfaisante, car limitée par la taille des pixels du capteur d'image 30. Aussi, entre les étapes 110 et 120, la première modalité peut comporter une acquisition successive de premières images, c'est-à-dire d'images acquises selon la première modalité, le capteur d'image 30 s'étendant dans un même plan de détection $P_{30}$. Entre chaque acquisition, le capteur d'image 30 est déplacé dans le plan de détection $P_{30}$. Durant ces acquisitions, la position relative de l'échantillon 10 par rapport à la première source de lumière 11 est maintenue constante, tandis que la position relative du capteur d'image 30 par rapport à l'échantillon 10, dans le plan de détection $P_{30}$, varie entre l'acquisition de deux premières images successives.

Selon ce mode de réalisation, le capteur d'image est relié à un actionneur mécanique 31, permettant de déplacer le capteur d'image dans le plan de détection. L'actionneur mécanique 31 peut être un transducteur piézoélectrique, ce dernier étant apte à se déplacer, dans un plan parallèle au plan de détection $P_{30}$, lorsqu'il est soumis à une excitation électrique. Le déplacement du transducteur piézoélectrique entraîne un déplacement du capteur d'image 30 parallèlement au plan de détection $P_{30}$.

Ainsi, entre chaque acquisition d'image, le transducteur piézoélectrique 31 est activé, de façon à engendrer un déplacement du capteur d'image parallèlement au plan de détection $P_{30}$. Le déplacement peut être aléatoire, ce qui peut être obtenu en utilisant un transducteur piézoélectrique simple et peu coûteux, sachant que le vecteur caractérisant le déplacement du capteur d'image 30 dans le plan de détection $P_{30}$ peut être déterminé comme décrit ci-après. La position relative de l'échantillon analysé 10 et de la première source de lumière 11 ne varie pas entre deux acquisitions successives. Ainsi, la même image est projetée sur le plan de détection $P_{30}$ ce qui n'est pas le cas lorsque la source de lumière est déplacée par rapport à l'échantillon 10, ou réciproquement. Ce mode de réalisation permet d'obtenir plusieurs acquisitions d'une même image projetée sur le plan de détection $P_{30}$, ces acquisitions étant obtenues selon différentes positions du capteur d'image 30 dans le plan de détection. La combinaison de ces acquisitions permet de former une image résultante $I_1^*$, dite de haute résolution, présentant une résolution spatiale améliorée par rapport à chaque première image $I_1$.

Lorsque différentes premières images $I_1$ sont formées respectivement selon différentes distances de défocalisation, on peut, à chaque distance de défocalisation, déplacer le capteur d'image 30 parallèlement au plan de détection $P_{30}$. On obtient alors une image résultante pour chaque distance de défocalisation considérée.

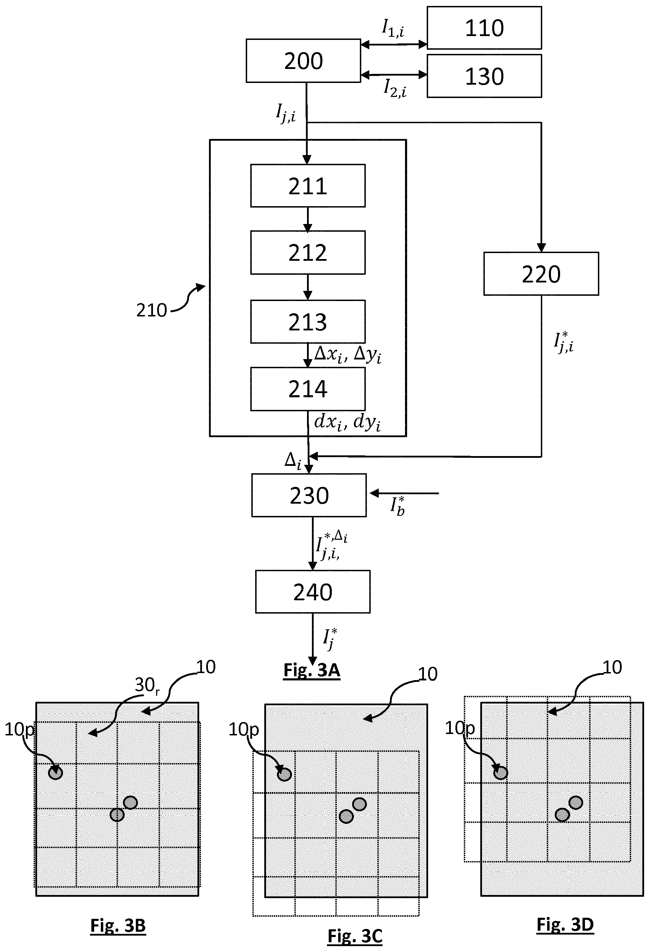

Les principales étapes d'une formation de la première image résultante sont décrites ci-après, en lien avec la figure 3A. Sur cette figure, et dans les étapes 200 à 240 décrites ci-dessous, l'indice $j$ désigne la modalité selon laquelle est acquise une image. Ainsi, lorsque $j = 1$, on se réfère à une image acquise selon la première modalité. Lorsque $j = 2$, on se réfère à une image acquise selon la deuxième modalité. En effet, l'algorithme d'amélioration de la résolution, illustré sur la figure 3A, peut s'appliquer aussi bien à des images défocalisées qu'à des images de fluorescence.

Selon cet algorithme, l'étape 110 (lorsque $j$ = 1) ou l'étape 130 (lorsque $j$ = 2) est réitérée plusieurs fois par une étape de réitération 200. Lors de la première itération, on acquiert une initiale $I_{j,i=0}$ associée à la position initiale du capteur d'image $(x_{i=0}, y_{i=0})$ dans le plan de détection. L'indice i est un entier positif désignant un rang d'itération.

Tant qu'un critère de sortie d'itération n'est pas atteint, le transducteur piézoélectrique 31 est activé de façon impulsionnelle, au cours de l'étape 200, pour modifier la position du capteur d'image dans le plan de détection, ce dernier passant d'une position $(x_i, y_i)$ à une position $(x_{i+1}, y_{i+1})$, puis on répète l'étape 110 (ou l'étape 130) avec une mise à jour de l'indice d'itération i.

Lorsque le critère de sortie de l'itération est atteint, on passe à l'étape 210. Le critère de sortie d'itération est par exemple un nombre $N_i$ prédéterminé d'images acquises. La réitération de l'étape 110 permet l'acquisition d'une pile de premières images acquises $I_{j,i}$, avec $0 \leq i \leq N_i$. Le nombre d'images acquises peut varier entre 2 et 20. Le terme activation impulsionnelle désigne une brève activation, dont la durée est généralement inférieure à 1 seconde, typiquement de l'ordre de quelques dizaines de millisecondes, suivie d'une période de repos au cours de laquelle une image peut être acquise.

Les figures 3B, 3C et 3D représentent trois positions différentes du capteur d'image 30 par rapport à un échantillon 10 comportant trois particules $10_p$. Du fait que la source de lumière est immobile par rapport à l'échantillon, l'image projetée dans le plan de détection est rigoureusement identique : la projection de chaque particule dans le plan de détection est fixe. Sur ces figures, le capteur d'image 30 a été représenté par un quadrillage délimitant des pixels $30_r$ du capteur. Le déplacement du capteur d'image 30 permet de faire varier la projection de chaque particule $10_p$, selon l'axe de propagation Z, par rapport au capteur d'image 30. Ainsi, la position relative de chaque particule $30_p$ par rapport à un pixel du détecteur est modifiée à chaque déplacement du capteur d'image.

Le déplacement du capteur d'image 30, entre deux premières images successives $I_{j,i}, I_{j,i+1}$, est de préférence inférieur à 5 pixels, ou à 10 pixels. Le champ d'observation utile, correspondant à la pile d'images acquises, est l'intersection du champ d'observation de chaque image. Aussi, la limitation du déplacement du capteur à quelques pixels permet de maximiser le champ d'observation. Il est important que le déplacement du capteur d'image corresponde à un nombre non entiers de pixels. En effet, lorsque le déplacement du capteur d'image correspond à un nombre entiers de pixels, l'image acquise par le capteur d'image 30 est une simple translation de l'image acquise avant le déplacement. Cela ne permet pas d'améliorer la résolution de l'image.

Etape 210 : Estimation du déplacement $\Delta_i$ de chaque première image $I_{j,i}$ par rapport à une image de référence $I_{ref-i}$. L'image de référence $I_{ref-i}$ peut être, par exemple l'image initiale $I_{j,0}$ ou l'image $I_{j,i-1}$ acquise précédemment à chaque image $I_{j,i}$. A l'image de référence est associée une position de référence $(x_{ref-i}, y_{ref-i})$ du capteur d'image 30. L'image de référence $I_{ref-i}$ peut être la même pour chaque image acquise, auquel cas elle est notée $I_{ref}$. Chaque déplacement, dans le plan de détection $P_{30}$, est alors calculé par rapport à une même position de référence, de telle sorte que $(x_{ref-i}, y_{ref-i})$ = $(x_{ref}, y_{ref})$. On a constaté que les résultats sont optimaux lorsque pour chaque image $I_{j,i}$ de la pile d'images, l'image de référence $I_{ref-i}$ est l'image initiale $I_{j,0}$. Autrement dit, $I_{ref} = I_{j,0}$.

Le déplacement $\Delta_i$ d'une image $I_{j,i}$ est un vecteur dont les coordonnées représentent un déplacement entre l'image de référence $I_{ref-i}$ et l'image acquise $I_{j,i}$, et plus particulièrement une translation dans le plan de détection.

Plusieurs méthodes sont connues pour estimer le déplacement de deux images l'une par rapport à l'autre. Dans le cas où le déplacement se résume à une translation dans un plan, les inventeurs ont mis en oeuvre une méthode basée sur un ratio entre des transformées de Fourier de l'image acquise $I_{j,i}$ considérée et de l'image de référence $I_{ref-i}$, de façon à estimer un déplacement selon un nombre entier de pixels, suivi d'une estimation d'un déplacement dit subpixelique, inférieur à la taille d'un pixel. L'étape 210 comporte alors les sous-étapes suivantes :

Sous-étape 211 : calcul des transformées de Fourier de l'image acquise $I_{j,i}$ et l'image de référence $I_{ref-i}$.

Sous-étape 212 : calcul d'un produit, terme à terme, entre les deux transformées de Fourier calculées lors de la sous-étape 211, de façon à obtenir une image combinée $I_{j,i/ref-i}$ telle que :

$$I_{j,i/ref-i} = \frac{TF(I_{j,i})TF^*(I_{ref-i})}{\left\|TF(I_{j,i})TF^*(I_{ref-i})\right\|}$$

Où $TF$ représente l'opérateur transformée de Fourier, cette dernière étant par exemple calculée selon un algorithme de transformée de Fourier rapide, connue sous l'acronyme $FFT$, et $TF^*$ représente l'opérateur transformée de Fourier conjuguée.

Sous-étape 213 : calcul d'une transformée de Fourier inverse de l'image $I_{j,i/ref\_i}$ obtenue lors de la sous-étape précédente. On obtient une image dont l'intensité maximale correspond à un point $(\Delta x_i, \Delta y_i)$, $\Delta x_i$ et $\Delta y_i$ étant les coordonnées du vecteur représentant le déplacement $\Delta_i$ recherché selon un nombre entier de pixels dans les deux directions du plan de détection $P_{30}$. $\Delta x_i$ et $\Delta y_i$ sont des déplacements selon un nombre entier de pixels. Ainsi, la recherche du point d'intensité maximal sur l'image, obtenue par transformée de Fourier inverse de l'image combinée $I_{j,i/ref\text{-}i}$, permet d'obtenir les coordonnées entières $\Delta x_i$ et $\Delta y_i$ du déplacement $\Delta_i$ recherché.

Sous-étape 214 : Estimation du déplacement subpixelique. Le déplacement $\Delta_i$ peut comporter une composante non entière, traduisant le déplacement, dit subpixelique, de l'image $I_{j,i}$ acquise selon un nombre non entier de pixels inférieur à 1. Les grandeurs $dx_i$ et $dy_i$ désignent respectivement un déplacement subpixelique dans les deux directions du plan de détection $P_{30}$. Chaque première image acquise $I_{j,i}$ peut être corrigée à l'aide des coordonnées entières $\Delta x_i$ et $\Delta y_i$ déterminées lors de la sous-étape 133 en formant une image intermédiaire $I_{j,i}^{\Delta x_i \Delta y_i}$ corrigée du déplacement selon $\Delta x_i$ et $\Delta y_i$ : $I_{j,i}^{\Delta x_i \Delta y_i}(x,y) = I_{j,i}(x - \Delta x_i ; y - \Delta y_i)$. Si $I_{j,i}^{\Delta_i}$ désigne l'image corrigée du déplacement $\Delta_i$, avec $\Delta_i = (\Delta x_i + dx_i ; \Delta y_i + dy_i)$, l'hypothèse de déplacements subpixeliques $dx_i$ et $dy_i$ permet d'établir une relation linéaire entre l'image intermédiaire $I_{j,i}^{\Delta x_i \Delta y_i}$ et l'image corrigée $I_{j,i}^{\Delta_i}$, de telle sorte que :

$$I_{j,i}^{\Delta_i}(x,y) = I_{j,i}^{\Delta x_i \Delta y_i}(x + dx_i, y + dy_i)$$

$$I_{j,i}^{\Delta_i}(x,y) = I_{j,i}^{\Delta x_i \Delta y_i}(x,y) + dx * \frac{dI_{j,i}^{\Delta x_i \Delta y_i}}{dx}(x,y) + dy * \frac{dI_{j,i}^{\Delta x_i \Delta y_i}}{dy}(x,y)$$

L'erreur $E_i(dx, dy)$ entre les images $I_{j,i}^{\Delta x_i \Delta y_i}$ et $I_{j,i}^{\Delta_i}$ peut s'écrire :

$$E_i(dx,dy) = \int (I_{j,i}^{\Delta_i}(x,y) - I_{j,i}^{\Delta x_i \Delta y_i}(x,y) - dx * \frac{dI_{j,i}^{\Delta x_i \Delta y_i}}{dx}(x,y) - dy *$$
$$\frac{dI_{j,i}^{\Delta x_i \Delta y_i}}{dy}(x,y))^2 \; dxdy$$

On peut estimer les valeurs $dx_i$ et $dy_i$ qui minimisent $E_i(dx, dy)$, avec $\frac{dE}{dx}(dx_i, dy_i) = 0$ et $\frac{dE}{dy}(dx_i, dy_i) = 0$

L'estimation de $dx_i$ et $dy_i$ permet d'obtenir le déplacement $\Delta_i = (\Delta x_i + dx_i ; \Delta y_i + dy_i)$

L'étape 214 est optionnelle. Lorsqu'elle n'est pas mise en oeuvre, le déplacement $\Delta_i$ est obtenu à l'aide des coordonnées entières $\Delta x_i$ et $\Delta y_i$ obtenues suite à la sous-étape 213.

Les sous-étapes 211 à 214 sont répétées pour chaque première image acquise $I_{j=1,i}$ de la pile d'images.

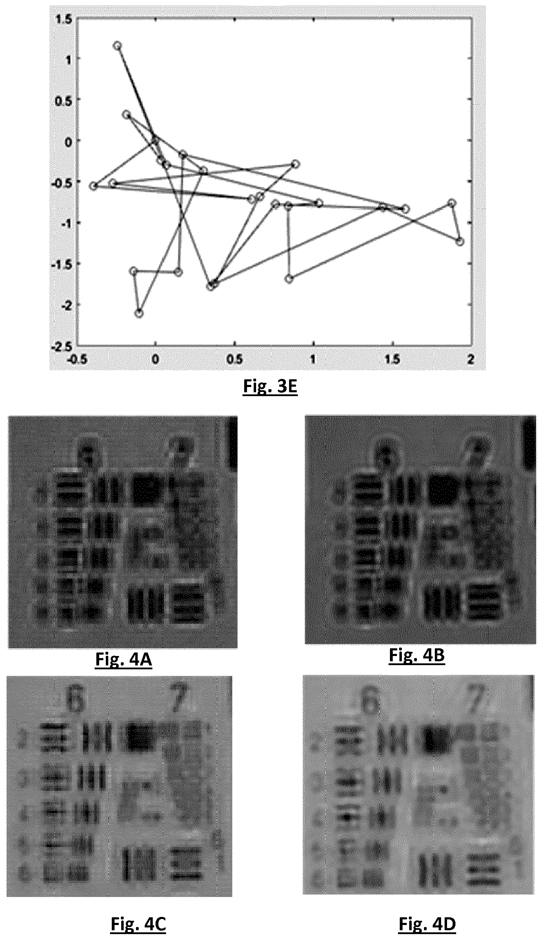

Sur la figure 3E, on a représenté les déplacements successifs $\Delta_i$ d'une pile de 25 images $I_{j=1,i}$, acquises selon la première modalité, la position (0,0) correspondant à la coordonnée de l'image initiale $I_{1,0}$. Les axes des abscisses et des ordonnées représentent respectivement les coordonnées de chaque déplacement $\Delta_i$ selon les axes X et Y définissant une base du plan de détection $P_{30}$.

Etape 220 : subpixellisation. Chaque image acquise $I_{j,i}$ est subpixellisée, par exemple d'un facteur compris entre 2 et 10. Par subpixellisation, on entend que chaque pixel de l'image est subdivisé en pixels virtuels. Pour cela, à partir de chaque image première acquise $I_{j,i}$, on détermine une première image dite subpixellisée $I_{j,i}^*$, comportant davantage de pixels que l'image acquise $I_j$ et correspondant au même champ d'observation. Chaque image subpixellisée $I_{j,i}^*$ peut être obtenue en subdivisant chaque pixel d'une image acquise $I_{j,i}$ en $N^2$ sous-pixels, $N$ étant un entier supérieur à 1. *N* peut être par exemple égal à 4, ce qui permet d'obtenir une image subpixellisée $I^*_{j,i}$ comportant 16 fois plus de pixels que l'image acquise $I_{j,i}$. La valeur des pixels de l'image subpixellisée est calculée par interpolation, par exemple bilinéaire ou bicubique, l'interpolation bicubique étant préférée. En subpixelisant chaque image $I_{j,i}$ de la pile d'images, on obtient une pile d'images subpixellisées $I^*_{j,i=0} \cdots I^*_{j,i=N_i}$

Etape 230 : recalage. Chaque image subpixellisée $I^*_{j,i}$ est recalée par rapport à une image subpixellisée, dite image de base $I^*_{j,b}$, de la pile d'images subpixellisées. L'image de base est par exemple l'image initiale acquise et subpixellisée, auquel cas $I^*_{j,b} = I^*_{j,i=0}$. Chaque image subpixellisée $I^*_{j,i}$ est alors recalée par rapport à l'image de base, en prenant en compte le déplacement $\Delta_i$ associé à l'image acquise $I_{j,i}$, déterminé lors de l'étape 210. On obtient ainsi une pile d'images subpixellisées et recalées, notées $I^{*,\Delta_i}_{j,i}$.

L'image de base $I^*_{j,b}$ utilisée pour le recalage est la même pour chaque image $I^*_{j,i}$ de la pile d'images subpixellisées. Il peut s'agir de l'image initiale (*i* = 0) ou de l'image finale (*i* = $N_i$) ou d'une image acquise lorsque le capteur d'image est positionné dans une position particulière.

Les étapes 220 et 230 peuvent être interverties, le recalage étant effectué par rapport une image de base $I_b$ avant la subpixellisation, de façon à obtenir une pile d'images recalées $I^{\Delta_i}_{j,i}$. Chaque image recalée est ensuite subpixellisée pour former une pile d'images subpixellisées et recalées, notées $I^{*,\Delta_i}_{j,i}$.

Etape 240 : combinaison des images subpixellisées et recalées $I^{*,\Delta_i}_{j,i}$, de façon à obtenir une image résultante $I^*_j$, présentant une résolution spatiale élevée. L'image résultante $I^*_j$ est obtenue par une combinaison arithmétique des images subpixellisées et recalées $I^{*,\Delta_i}_{j,i}$, par exemple sous la forme d'une moyenne, selon l'expression :

$$I^*_j = mean(I^{*,\Delta_i}_{j,i})$$

Si chaque image acquise comporte *Nx* x *Ny* pixels, l'image résultante de haute résolution comporte $N^2 \times Nx \times Ny$ pixels.

L'image résultante $I^*_j$, de haute résolution présente une résolution spatiale supérieure à chacune des $N_i$ images acquises $I_{j,i}$.

Lorsque les images sont acquises selon la première modalité (*j* = 1), par une réitération de l'étape 110, l'étape 120 de reconstruction holographique peut être mise en oeuvre, à partir de l'image $I^*_1$. Lorsqu'on acquiert des premières images selon différentes distances de défocalisation, et, à chaque distance de défocalisation, en modifiant la position du capteur d'image 30 dans le plan de détection $P_{30}$, les premières images acquises à une même ,distance de défocalisation sont combinées pour former une image résultante $I^*_1$, et cela pour chaque distance de défocalisation considérée.

De façon alternative, les étapes 200 à 240 peuvent être mises en oeuvre à partir d'images reconstruites en mettant en oeuvre un algorithme de propagation holographique sur chaque image acquise. Par exemple, les étapes 200 à 240 peuvent être mises en oeuvre à partir d'images représentant le module ou la phase d'images complexes reconstruites.

Le mode de réalisation, permettant de former une image résultante de haute résolution, a été testé. L'échantillon observé était une mire USAF-1951. La figure 4A est une première image acquise, c'est-à-dire une image acquise selon la première modalité. La figure 4C est une image du module d'une image complexe obtenue par application d'un algorithme de reconstruction holographique appliqué à l'image de la figure 4A.

On a mis en oeuvre l'algorithme décrit en lien avec les étapes 200 à 240, à partir de plusieurs images telles que celle représentée sur la figure 4A, chaque image étant décalée l'une par rapport à l'autre. On a obtenu une image résultante $I_1^*$, de haute résolution, représentée sur la figure 4B. Les figures 4C et 4D sont respectivement des images du module d'une image complexe obtenue par application d'un algorithme de reconstruction holographique à l'image de la figure 4A et 4B. La figure 4D présente une résolution plus élevée que la figure 4C.

Comme précédemment décrit, l'algorithme d'amélioration de la résolution, décrit en lien avec les étapes 200 à 240, est mis en oeuvre non pas avec des images obtenues selon la première modalité, mais selon des images acquises selon la deuxième modalité. Au cours de l'étape 200, on acquiert une pile d'images $I_{2,i}$ selon la deuxième modalité en réitérant l'étape 130 du procédé décrit en lien avec la figure 3A. A la suite de l'étape 240, on dispose d'une deuxième image résultante $I_2^*$, de haute résolution.

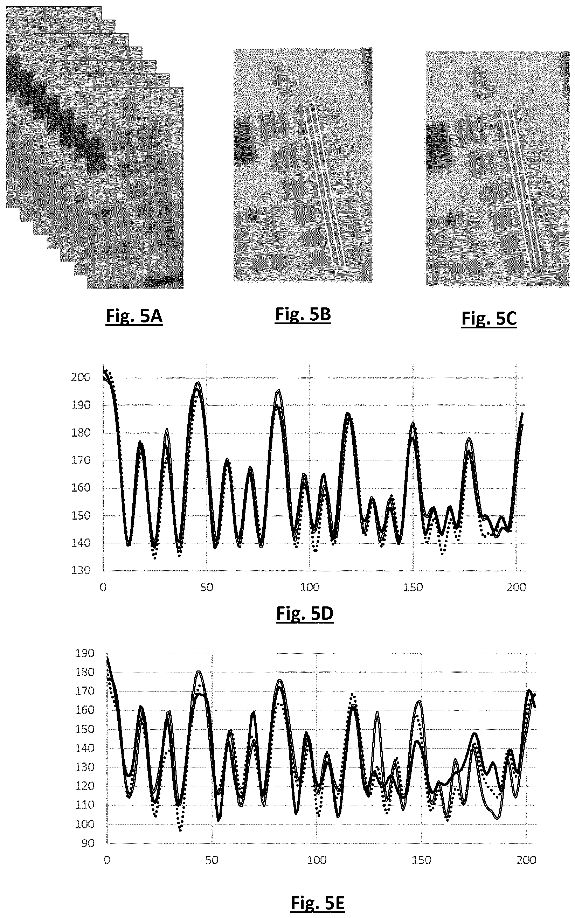

Un tel algorithme a tout d'abord été testé en disposant la mire USAF-1951 sur une lame homogène fluorescente. La figure 5A représente une pile de 25 images $I_{2,i}$. A partir ce cette pile d'images, on a mis en oeuvre les étapes 210 à 240. On a obtenu une image résultante $I_2^*$ représentée sur la figure 5B. La figure 5C montre une image obtenue en mettant en oeuvre les étapes 210 à 240 à partir de 25 images successivement acquises sans déplacer le capteur d'image 30 entre chaque acquisition. On observe le gain en résolution obtenu en déplaçant le capteur entre chaque acquisition d'image, la figure 5B présentant une meilleure résolution que la figure 5C.

Les figures 5D et 5E montrent des profils d'intensité des pixels selon les lignes tracées respectivement sur les figures 5B et 5C. Ces profils illustrent le gain en résolution obtenu en déplaçant le capteur entre chaque image.

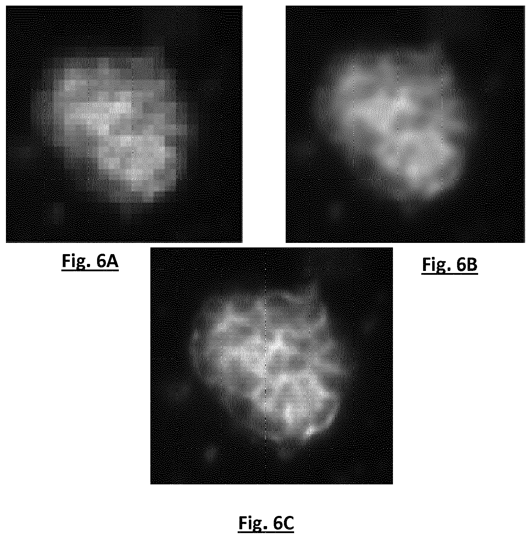

Des cellules Caco2, marquées au DAPI, ont été imagées selon la deuxième modalité d'imagerie. Différentes images ont été acquises, en déplaçant le capteur d'image 30 entre chaque acquisition. Ces images ont été traitées par les étapes 210 à 250. La figure 6A représente une des images acquises. On a ensuite obtenu une image résultante de haute résolution, telle que représentée sur la figure 6B. La comparaison des figures 6A et 6B permet d'apprécier le gain en résolution obtenu. La figure 6C montre une image de référence, obtenue en microscopie de fluorescence, selon une méthode standard.

L'invention pourra être mise en oeuvre dans le domaine de la biologie ou de la santé, mais également dans le contrôle de l'environnement, l'agroalimentaire ou d'autres procédés industriels.

## Revendications

1. Procédé d'observation d'un échantillon fluorescent (10), s'étendant selon un plan ($P_{10}$), dit plan de l'échantillon, l'échantillon comportant un agent fluorescent ($10_f$) apte à émettre une onde lumineuse de fluorescence ($\Delta_f$), dans une bande spectrale de fluorescence ($\Delta\lambda_f$), lorsqu'il est illuminé par une onde lumineuse d'excitation ($\Delta_e$), dans une bande spectrale d'excitation ($\Delta\lambda_e$), l'échantillon (10) étant disposé face à un capteur d'image (30), le capteur d'image (30) s'étendant selon un plan de détection ($P_{30}$), le capteur d'image étant couplé à un système optique (20), le procédé comportant les étapes suivantes :

   a) première illumination de l'échantillon (10) à l'aide d'une première source de lumière (11), selon une première bande spectrale ($\Delta\lambda_1$), et selon un premier axe de propagation (Z), et acquisition d'au moins une première image de l'échantillon ($I_1$), dans la première bande spectrale, par le capteur d'image (30), le capteur d'image étant défocalisé, par rapport à l'échantillon, selon une distance de défocalisation;
   b) deuxième illumination de l'échantillon (10) à l'aide d'une deuxième source de lumière (21), selon une deuxième bande spectrale ($\Delta\lambda_2$), la deuxième bande spectrale s'étendant dans la bande spectrale d'excitation ($\Delta\lambda_e$), la deuxième illumination illuminant une surface de l'échantillon supérieure à 10 mm$^2$, et acquisition d'au moins une deuxième image de l'échantillon ($I_2$), dans la bande spectrale de fluorescence, par le capteur d'image (30), le capteur d'image étant disposé de telle sorte que le plan de détection est conjugué au plan de l'échantillon;

   le procédé comportant, entre l'étape a) et l'étape b), un déplacement de l'échantillon relativement au système optique, ou un déplacement du capteur d'image relativement au système optique, parallèlement au premier axe de propagation (Z), selon la distance de défocalisation, ou une modification de la distance focale du système optique, selon la distance de défocalisation,
   de telle sorte que :

- la première image ($I_1$), ou chaque première image ($I_1$), est une image défocalisée de l'échantillon, représentative d'une structure de l'échantillon ;
- la deuxième image ($I_2$), ou chaque deuxième image ($I_2$), est une image focalisée de l'échantillon, représentative d'une fluorescence de l'échantillon ;

le procédé étant **caractérisé en ce que** l'étape a) comporte les sous-étapes suivantes :

ai) acquisition de plusieurs premières images ($I_{j=1,i}$) de l'échantillon, l'échantillon étant immobile par rapport à la première source de lumière, le capteur d'image étant déplacé, dans le plan de détection ($P_{30}$), entre deux acquisitions successives ;

aii) association, à chaque première image acquise, d'une position (($x_i,y_i$)) du capteur d'image dans le plan de détection, chaque position étant différente l'une de l'autre, à chaque position du capteur d'image correspondant un champ d'observation de la première image ;

aiii) calcul d'un déplacement ($\Delta_i$) de chaque première image acquise par rapport à une image de référence ($I_{ref-i}$) dans laquelle le capteur d'image occupe une position de référence ;

aiv) formation d'une première image résultante $(I_1^*)$, à partir des premières images acquises lors de la sous-étape ai), et du déplacement calculé pour chacune d'entre elles, la première image résultante comportant davantage de pixels que chaque première image, le champ d'observation de la première image résultante étant formé par une intersection des champs d'observation de chaque première image acquise lors de la sous-étape ai).

2. Procédé selon la revendication 1, dans lequel lors de l'étape b), l'échantillon est illuminé par un faisceau d'illumination parallèle.

3. Procédé selon l'une quelconque des revendications précédentes, comportant une étape c) d'application d'un opérateur de reconstruction (h) à partir de la première image $(I_1)$, de façon à obtenir une image reconstruite de l'échantillon ($A_z$, $M_z$, $\varphi_z$) dans un plan de reconstruction ($P_z$).

4. Procédé selon la revendication 3, dans lequel l'étape a) comporte plusieurs acquisitions de premières images $(I_1)$, respectivement selon différentes distances de défocalisation, et dans lequel l'étape c) comporte une prise en compte des premières images acquises lors de l'étape a).

5. Procédé selon l'une quelconque des revendications précédentes, dans lequel lors de l'étape a), la distance de défocalisation est inférieure à 5 mm.

6. Procédé selon l'une quelconque des revendications précédentes, dans lequel :

- la deuxième source de lumière (21) est disposée dans un demi-espace délimité par le plan de l'échantillon ($P_{10}$) et comprenant le capteur d'image (30) ;
- ou la deuxième source de lumière (21) est disposée dans un demi-espace délimité par le plan de l'échantillon ($P_{10}$) et comprenant la première source de lumière (11).

7. Procédé selon l'une quelconque des revendications précédentes, dans lequel les étapes a) et b) sont réalisées successivement, l'étape a) étant réalisée avant l'étape b) ou réciproquement.

8. Procédé selon l'une quelconque des revendications précédentes, dans lequel lors de l'étape b), le système optique (20) présentant une distance focale, il est disposé selon une configuration dite 2f-2f, selon laquelle :

- la distance entre le capteur d'image (30) et le système optique (20) est égale à deux fois la distance focale;
- la distance entre le système optique (20) et l'échantillon (10) est égale à deux fois la distance focale ;

de telle sorte que la deuxième image ($I_2$), ou chaque deuxième image ($I_2$) est acquise selon un grandissement de l'échantillon égal à 1.

9. Procédé selon l'une quelconque des revendications précédentes, dans lequel l'étape a) comporte plusieurs acquisitions de premières images, respectivement selon différentes distances de défocalisation, et dans lequel les sous-étapes ai) à aiv) sont effectuées pour chaque distance de défocalisation, de façon à obtenir une première image résultante $(I_1^*)$, pour chaque distance de défocalisation.

10. Procédé selon l'une quelconque des revendications précédentes, comportant une étape c) d'application d'un opérateur de reconstruction ($h$) à partir la première image résultante $(I_1^*)$, ou d'au moins une première image résultante $(I_1^*)$, de façon à obtenir une image reconstruite de l'échantillon ($A_z$, $M_z$, $\varphi_z$) dans un plan de reconstruction ($P_z$).

11. Procédé selon l'une quelconque des revendications précédentes, dans lequel l'étape b) comporte les sous-étapes suivantes:

    bi) acquisition de plusieurs deuxièmes images ($I_{j=2,i}$) de l'échantillon, l'échantillon étant immobile par rapport à la deuxième source de lumière, le capteur d'image étant déplacé, dans le plan de détection ($P_{30}$), entre deux acquisitions successives ;
    bii) association, à chaque deuxième image acquise, d'une position (($x_i$ $y_i$)) du capteur d'image dans le plan de détection, chaque position étant différente l'une de l'autre, à chaque position du capteur d'image correspondant un champ d'observation de la deuxième image ;
    biii) calcul d'un déplacement ($\Delta_i$) de chaque deuxième image acquise par rapport à une image de référence ($I_{ref-i}$) dans laquelle le capteur d'image occupe une position de référence ;
    biv) formation d'une deuxième image résultante $(I_2^*)$, à partir des deuxièmes images acquises et du déplacement calculé pour chacune d'entre elles, la deuxième image résultante comportant davantage de pixels que chaque deuxième image, le champ d'observation de la deuxième image résultante étant formé par une intersection des champs d'observation de chaque deuxième image acquise lors de la sous-étape bi).

12. Procédé selon l'une quelconque des revendications précédentes, dans lequel le capteur d'image (16) est solidaire d'un transducteur piézoélectrique (19), le déplacement du capteur d'image étant généré par une activation du transducteur piézoélectrique (19).

13. Procédé selon l'une quelconque des revendications précédentes, dans lequel la première image comporte une information relative :

    - à une forme de l'échantillon ou de particules disposées dans l'échantillon;
    - ou à un aspect visuel de l'échantillon ou de particules disposées dans l'échantillon;
    - ou à une structure interne de l'échantillon ou de particules disposées dans l'échantillon;

14. Dispositif (1) d'observation d'un échantillon fluorescent (10), l'échantillon comportant un agent fluorescent apte à émettre une onde lumineuse ($\Delta_f$) dans une bande spectrale de fluorescence ($\Delta\lambda_f$) lorsqu'il est illuminé selon une bande spectrale d'excitation ($\Delta\lambda_e$), le dispositif comportant :

    - une première source de lumière (11) configurée pour émettre une onde lumineuse selon une première bande spectrale ($\Delta\lambda_1$);
    - une deuxième source de lumière (21), configurée pour émettre une onde lumineuse dans une deuxième bande spectrale ($\Delta\lambda_2$), s'étendant dans une bande spectrale d'excitation ($\Delta\lambda_e$) de l'agent fluorescent ;
    - un capteur d'image (30), optiquement couplé à un système optique (20), le capteur d'image s'étendant dans un plan de détection ($P_{30}$);
    - un support (10s), destiné à recevoir l'échantillon, de telle sorte que l'échantillon, lorsqu'il est disposé sur le support, s'étend selon un plan ($P_{10}$), dit plan d'échantillon, ce dernier s'étendant entre le système optique (20) la première source de lumière (11);
    - un moyen de déplacement ($30_t$), pour déplacer l'échantillon relativement au système optique ou pour déplacer le capteur d'image relativement au système optique, ou un moyen pour modifier une distance focale du système optique (20) ;

    de telle sorte que le capteur d'image (30) est configuré pour acquérir :

    - une première image défocalisée de l'échantillon ($I_1$), dans la première bande spectrale ($\Delta\lambda_1$), lorsque l'échan-

tillon est illuminé par la première source de lumière (11);
- une deuxième image nette de l'échantillon ($I_2$), dans la bande spectrale de fluorescence ($\Delta\lambda_f$), lorsque ce dernier est illuminé par la deuxième source de lumière (21) ;

le dispositif comportant un transducteur piézoélectrique (19), relié au capteur d'image, apte à induire un déplacement ($\Delta_i$) du capteur d'image (30) dans le plan de détection ($P_{30}$).

**15.** Dispositif selon la revendication 14, comportant un microprocesseur, configuré pour exécuter des instructions permettant la mise en oeuvre de:

- l'étape c) de la revendication 3 ou de la revendication 4 ;
- et/ou les sous-étapes aii) à aiv) de la revendication 10 ou de la revendication 11 ;
- et/ou les sous-étapes bii) à biv) de la revendication 13.

**Fig. 1A**

**Fig. 1B**

Fig. 2A

Fig. 2B

Fig. 2C

Fig. 2D

Fig. 2E

Fig. 2F

Fig. 2G

Fig. 2H

**Fig. 3A**

**Fig. 3B**

**Fig. 3C**

**Fig. 3D**

**Fig. 3E**

**Fig. 4A**

**Fig. 4B**

**Fig. 4C**

**Fig. 4D**

**Fig. 5A**          **Fig. 5B**          **Fig. 5C**

**Fig. 5D**

**Fig. 5E**

**Fig. 6A**

**Fig. 6B**

**Fig. 6C**

Europäisches
Patentamt

European
Patent Office

Office européen
des brevets

**RAPPORT DE RECHERCHE EUROPEENNE**

Numéro de la demande

EP 19 17 5654

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | EP 2 023 127 A1 (OLYMPUS CORP [JP]) 11 février 2009 (2009-02-11) <br><br> * alinéas [0072], [0107], [0108], [0125], [0126], [0139], [0148]; figures 5-10,13,23,24 * <br> ----- | 1,2, 5-12,14, 15 | INV. G01N21/64 G03H1/00 G01N15/14 <br><br> ADD. G01N21/45 |
| Y | WO 2016/107995 A1 (COMMISSARIAT À L ÉNERGIE ATOMIQUE ET AUX ÉNERGIES ALTERNATIVES [FR]; B) 7 juillet 2016 (2016-07-07) * abrégé; page 3, ligne 30, à page 4, ligne 13; page 5, lignes 9-19; page 10, lignes 22-26; page 14, ligne 21, à page 16, ligne 8; page 17, lignes 10-16; figures 1,9 * <br> ----- | 1,3,4, 6-8, 13-15 | |
| Y | US 2011/254943 A1 (OZINSKY ADRIAN [US] ET AL) 20 octobre 2011 (2011-10-20) <br><br> * alinéas [0011], [0014], [0020], [0057], [0064], [0074]; figures 1,8 * <br> ----- | 1,3,4, 6-8, 13-15 | |
| A | Anonymous: "Relay lens", Wikipedia, 23 octobre 2017 (2017-10-23), XP055527011, Extrait de l'Internet: URL:https://en.wikipedia.org/w/index.php?title=Relay_lens&oldid=806695820 [extrait le 2018-11-26] * le document en entier * <br> ----- | 8 | DOMAINES TECHNIQUES RECHERCHES (IPC) <br> G01N G03H G02B |
| Y | US 2005/056768 A1 (OLDHAM MARK F [US] ET AL) 17 mars 2005 (2005-03-17) * abrégé * <br> ----- <br> -/-- | 1-13,15 | |

Le présent rapport a été établi pour toutes les revendications

| Lieu de la recherche | Date d'achèvement de la recherche | Examinateur |
|---|---|---|
| Munich | 4 octobre 2019 | Weinberger, Thorsten |

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 19 17 5654

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | EP 3 064 981 A1 (HAMAMATSU PHOTONICS KK [JP]) 7 septembre 2016 (2016-09-07) * abstract; alinéa [0031] * ----- | 1-15 | |
| A | US 2017/284926 A1 (PERRAUT FRANCOIS [FR] ET AL) 5 octobre 2017 (2017-10-05) * abrégé * ----- | 1,3,4, 14,15 | |
| A | HONGDA WANG ET AL: "Computational out-of-focus imaging increases the space-bandwidth product in lens-based coherent microscopy", OPTICA, vol. 3, no. 12, 28 novembre 2016 (2016-11-28), pages 1422-1429, XP055465045, US ISSN: 2334-2536, DOI: 10.1364/OPTICA.3.001422 * le document en entier * ----- | 1,14 | |
| A | MANDULA ONDREJ ET AL: "Phase from defocus", PROGRESS IN BIOMEDICAL OPTICS AND IMAGING, SPIE - INTERNATIONAL SOCIETY FOR OPTICAL ENGINEERING, BELLINGHAM, WA, US, vol. 10503, 23 février 2018 (2018-02-23), pages 105031Q-105031Q, XP060100999, ISSN: 1605-7422, DOI: 10.1117/12.2287693 ISBN: 978-1-5106-0027-0 * le document en entier * ----- | 1,14 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| Munich | 4 octobre 2019 | Weinberger, Thorsten |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 19 17 5654

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-10-2019

| Document brevet cité au rapport de recherche | | | Date de publication | Membre(s) de la famille de brevet(s) | | | Date de publication |
|---|---|---|---|---|---|---|---|
| EP 2023127 | A1 | | 11-02-2009 | CN | 101438147 | A | 20-05-2009 |
| | | | | EP | 2023127 | A1 | 11-02-2009 |
| | | | | JP | 5307539 | B2 | 02-10-2013 |
| | | | | JP | WO2007139201 | A1 | 15-10-2009 |
| | | | | US | 2009086314 | A1 | 02-04-2009 |
| | | | | WO | 2007139201 | A1 | 06-12-2007 |
| WO 2016107995 | A1 | | 07-07-2016 | CN | 107110764 | A | 29-08-2017 |
| | | | | EP | 3241014 | A1 | 08-11-2017 |
| | | | | FR | 3031180 | A1 | 01-07-2016 |
| | | | | JP | 2018504594 | A | 15-02-2018 |
| | | | | US | 2017363533 | A1 | 21-12-2017 |
| | | | | WO | 2016107995 | A1 | 07-07-2016 |
| US 2011254943 | A1 | | 20-10-2011 | AUCUN | | | |
| US 2005056768 | A1 | | 17-03-2005 | US | 7199357 | B1 | 03-04-2007 |
| | | | | US | 2005056768 | A1 | 17-03-2005 |
| EP 3064981 | A1 | | 07-09-2016 | CN | 105683805 | A | 15-06-2016 |
| | | | | EP | 3064981 | A1 | 07-09-2016 |
| | | | | JP | 6154291 | B2 | 28-06-2017 |
| | | | | JP | 2015087719 | A | 07-05-2015 |
| | | | | US | 2016267317 | A1 | 15-09-2016 |
| | | | | WO | 2015064116 | A1 | 07-05-2015 |
| US 2017284926 | A1 | | 05-10-2017 | CN | 107110762 | A | 29-08-2017 |
| | | | | EP | 3234550 | A1 | 25-10-2017 |
| | | | | FR | 3030749 | A1 | 24-06-2016 |
| | | | | JP | 2018507392 | A | 15-03-2018 |
| | | | | US | 2017284926 | A1 | 05-10-2017 |
| | | | | WO | 2016097092 | A1 | 23-06-2016 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016107995 A
- EP 2023127 A
- US 20110254943 A
- WO 2017162985 A

**Littérature non-brevet citée dans la description**

- **CHOWDHURY S.** Spatial frequency-domain multiplexed microscopy for simultaneous, single camera, one-shot, fluorescent, and quantitative -phase imaging. *Optics Letters,* Novembre 2015, vol. 40 (21
- **PARK Y.** Diffraction phase and fluorescence microscopy. *Optics Express,* Septembre 2006, vol. 14 (18
- **COSKUN A.** Lensfree Fluorescent On-chip imaging of transgenic Caenorhabditis elegans over an ultra-wide field of view. *PLoS ONE,* Janvier 2011, vol. 511, e15955
- **SEO S et al.** High-Throughput lens-free blood analysis on a chip. *Anal Chem.,* 01 Juin 2010, vol. 82 (11), 4621-4627
- **GREENBAUM A.** Field-portable wide-field microscopy of dense samples using multi-height pixel super-resolution based lensfree imaging. *Lab Chip,* 2012, vol. 12, 1242